# EUROPEAN PATENT SPECIFICATION

(11) **EP 3 125 529 B1**
(45) Date of publication and mention of the grant of the patent: **05.06.2019**
(21) Application number: 16164724.3
(22) Date of filing: 11.04.2016
(51) Int. Cl.: H04N 5/232

(54) **METHOD AND DEVICE FOR IMAGE PHOTOGRAPHING**
VERFAHREN UND VORRICHTUNG ZUR BILDFOTOGRAFIE
PROCÉDÉ ET DISPOSITIF DE PHOTOGRAPHIE D'IMAGE

(30) Priority: 31.07.2015 CN 201510463273
(43) Date of publication of application: 01.02.2017
(73) Proprietor: Xiaomi Inc., Beijing 100085 (CN)
(72) Inventor: CHEN, Tao, 100085 BEIJING (CN); TANG, Mingyong, 100085 BEIJING (CN); LIU, Huayijun, 100085 BEIJING (CN)
(74) Representative: Perrot, Emilie

(56) References cited:
- US-A1- 2009 015 702
- US-A1- 2010 266 206
- US-A1- 2012 098 992
- US-A1- 2012 323 581
- US-A1- 2013 038 759
- US-A1- 2013 155 249
- US-A1- 2015 002 633

## Description

### TECHNICAL FIELD

The present invention generally relates to the field of image photographing technology, and more particularly, to a method and a device for image photographing.

### BACKGROUND

Recently, electronic devices with a photographing image function, such as mobile phone, camera and smart glasses have become one of the travel essential electronic products.

When a user wants to photograph a selfie from certain angle, he may aim camera of an electronic product at himself, then perform the photographing. However, since the user may not be posing with the greatest satisfaction at the moment taking the photo, he usually needs to make several attempts before obtaining the most satisfactory photo.

Document US 2015/0002633 relates to an imaging apparatus having a projector and a control method thereof.

Document US 2013/0038759 relates to a mobile terminal (portable terminal) capable of capturing an image, and a control method of mobile terminal.

Document US 2010/0266206 relates to a method for adjusting a pose of a user at the time of taking self-portrait photographs.

Document US 2013/0155249 relates to thermal imaging cameras for use in retaking infrared images.

Document US 2009/0015702 is directed to a method, image capturing device, or computer program product for enabling the provision of enhanced image capturing functionality.

Document US 2012/0098992 relates to an imaging apparatus capable of performing automatic zoom control.

### SUMMARY

A method and a device for image photographing are provided in the invention. Technical solutions are disclosed as follows:
According to a first aspect, the invention relates to a method for image photographing according to claim 1.

In a particular embodiment, the method further comprises: determining whether a photographing device is in horizontal state according to a gravity sensor; and
performing an operation of photographing automatically an image containing the target object.

In a particular embodiment, the method further comprises: detecting whether a view image is consistent with preset conditions, wherein the preset conditions include: a proportion of the target object in the view image reaching to a preset proportion, and/or the area occupied by the target object in the view image being a preset area; and performing an operation of photographing automatically an image containing the target object.

In a particular embodiment, the step of photographing automatically an image containing the target object comprises: issuing a photographing prompt information; upon having waited for a predetermined period of time, photographing automatically an image containing the target object.

In a particular embodiment, the method further comprises: issuing a voice prompt information, if the pose of the target object matches with the preset pose for photographing, wherein the voice prompt information is used for prompting the target object to change the target object pose.

According to a second aspect, the invention relates to a device for image photographing according to claim 6.

In a particular embodiment, the device further comprises: a state determining module configured to determine whether a photographing device is in a horizontal state according to a gravity sensor; and the image photographing module configured to perform the operation of photographing automatically an image containing the target object when the state determining module determines the photographing device is in the horizontal state.

In a particular embodiment, the device further comprises: an image detecting module configured to detect whether the view image is consistent with preset conditions, wherein the preset conditions include: a proportion of the target object in the view image reaching to a preset proportion, and/or the area occupied by the target object in the view image being a preset area; and the image photographing module configured to perform the operation of photographing automatically an image containing the target object if the image detecting module detects the view image is consistent with the preset conditions.

In a particular embodiment, the image photographing module comprises: an information issuing sub-module configured to issue a photographing prompt information; and an image photographing sub-module configured to photograph automatically an image containing the target object upon having waited for a predetermined period of time.

In a particular embodiment, the device further comprises: an information prompt module configured to issue a voice prompt information, if the pose of the target object mismatches with the preset pose for photographing, wherein the voice prompt information is used for prompting the target object to change the target object pose.

In one particular embodiment, the steps of the method for image photographing are determined by computer program instructions.

Consequently, according to a third aspect, the invention is also directed to a computer program for executing the steps of a method for image photographing as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Embodiments of the invention may provide at least some of the following beneficial effects: by obtaining a preset pose for photographing, an image containing a target object may be photographed automatically, if the pose of the target object in a view image matches with the preset pose for photographing, which solves the problem in the related art that a user needs to make several attempts before taking an satisfactory image, thus reaching the effects that a photographing device may photograph automatically when a pose of a target object matches with a preset pose for photographing, and thereby the complexity of user operations is reduced.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating an implementation environment related to a method for image photographing according to some of exemplary embodiments.
Fig. 2 is a flow diagram illustrating a method for image photographing according to an exemplary embodiment.
Fig. 3A is a flow diagram illustrating a method for image photographing according to another exemplary embodiment.
Fig. 3B is a schematic diagram illustrating a view image obtained by a photographing device according to another exemplary embodiment.
Fig. 4 is a block diagram illustrating an image photographing device according to an exemplary embodiment.
Fig. 5 is a block diagram illustrating an image photographing device according to another exemplary embodiment.
Fig. 6 is a block diagram illustrating a device for image photographing according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

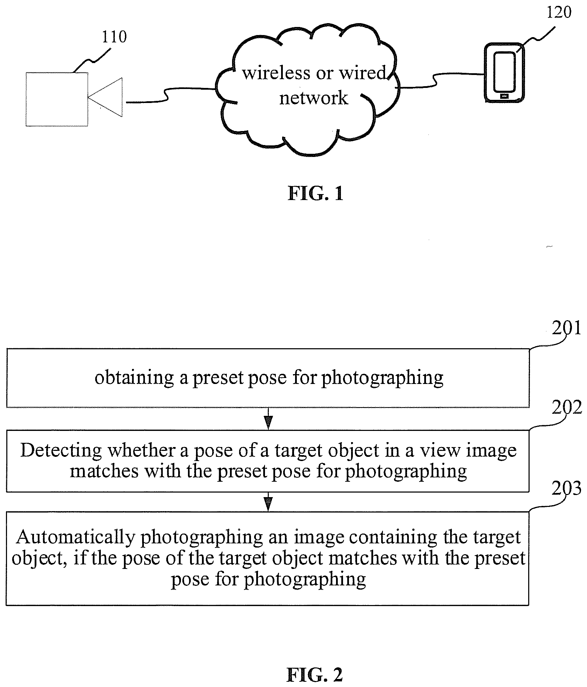

Referring to Fig. 1, which illustrates a schematic diagram of an implementation environment related to a method provided in some of exemplary embodiments of the present invention. As illustrated in Fig. 1, the implementation environment may include a photographing device 110 and a smart terminal 120.

The photographing device 110 may be a device with photographing function. The photographing device 110 may be a mobile phone, a computer including a camera, a digital camera or a motion camera, etc. The photographing device 110 may be connected to the smart terminal 120 via wired or wireless network.

The smart terminal 120 may be a terminal such as a mobile phone, a tablet, or an e-reader.

Fig. 2 is a flow diagram illustrating a method for image photographing according to an exemplary embodiment. As illustrated in Fig. 2, the method for image photographing may include the following steps.

In step 201, a preset pose for photographing is obtained.

In step 202, whether a pose of a target object in a view image matches with the preset pose for photographing is detected.

In step 203, the pose of the target object is photographed automatically, if the pose of the target object matches with the preset pose for photographing.

To sum up, by obtaining the preset pose for photographing to photograph automatically an image containing the target object, if the pose of the target object in the view image matches with the preset pose for photographing, the method for image photographing provided in the embodiment of the invention may reach the following effects: the photographing device may photograph automatically when the pose of a target object matches with the preset pose for photographing, and thus the complexity of user operations is reduced. Meanwhile, by automatically photographing an image containing the target object, the method may avoid the problem that a user's expression might be affected due to having the shutter snap when he photographs manually.

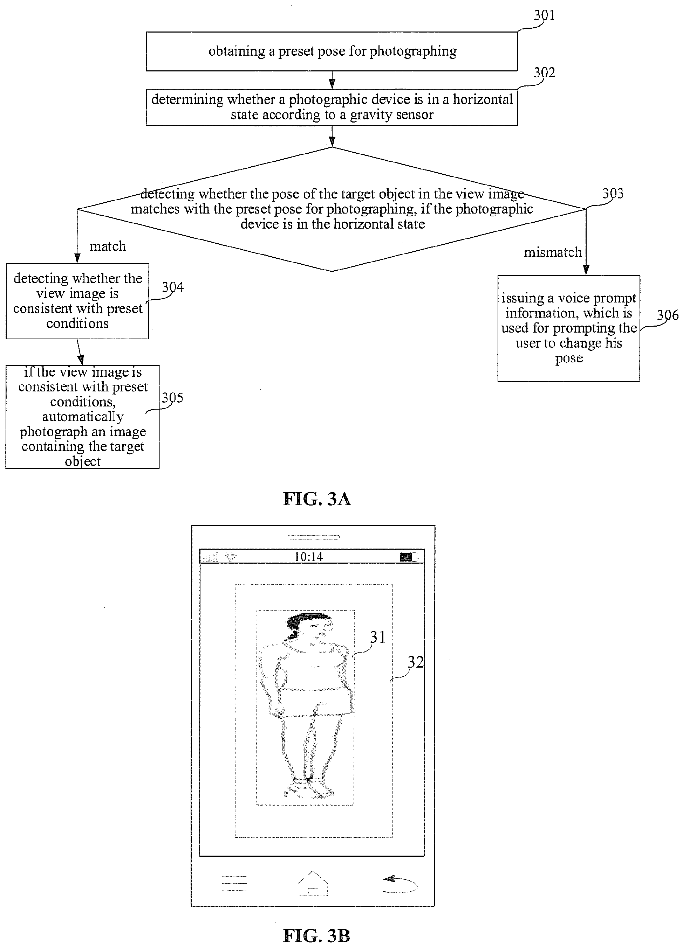

Fig. 3A is a flow diagram illustrating a method for image photographing according to an exemplary embodiment. As illustrated in Fig. 3A, the method for image photographing includes the following steps.

In step 301, a preset pose for photographing is obtained.

This step includes the following two possible implementations.

In the first implementation, a pose setting signal is received, wherein the pose set by the pose setting signal is taken as the preset pose for photographing.

The user may set a pose for photographing in the photographing device. Accordingly, the photographing device may receive a pose setting signal set by the user, setting a pose for photographing, and take the pose set by the pose setting signal as the preset pose for photographing.

Alternatively, as a possible implementation, the photographing device may display a pose setting interface including 3D human figure model. The photographing device receives a setting signal for setting a pose of 3D human figure model imposed by the user, and determine the pose set by the setting signal as the preset pose for photographing. The user may change the pose of the 3D human figure model by sliding up-down or left-right, i.e., the photographing device may change the pose of the 3D human figure model according to the received up-down or left-right sliding signal.

For example, in the event that the photographing device is a mobile phone, when a user wants to take a photo of the right side of his body, he may apply a right-sliding signal on the 3D human figure model displayed on his mobile phone. After the reception of the sliding signal, the mobile phone rotates the 3D human figure model to the right. When rotating the 3D human figure model at a satisfactory angle, the user may stop sliding, and tap the confirmation option on the pose setting interface. After the reception of the tap signal, the current pose of the 3D human figure model is determined as the preset pose for photographing.

Alternatively, a plurality of candidate pose for photographing may be prestored in the photographing device, for example a plurality of figure images including different poses is prestored. A selection signal, which is for selecting one of the candidate poses for photographing, is received, and then the pose selected by the selection signal is taken as the preset pose for photographing.

In the second implementation, a preset pose for photographing is obtained from a smart terminal, which is a pose being preset in the smart terminal.

The photographing device may establish a wireless connection with the smart terminal, and then through the wireless connection obtain a preset pose for photographing from the smart terminal. For example, in the event that the photographing device is a motion camera, and the smart terminal is a mobile phone, the motion camera may establish a WiFi (Wireless Fidelity) connection or Bluetooth connection with the mobile phone, and obtain a preset pose for photographing from it. The method for setting a preset pose for photographing in a mobile phone is similar with that in the first possible implementation, and not explained in detail herein.

In step 302, whether the photographing device is in a horizontal state is determined according to a gravity sensor.

In step 303, if the photographing device is in the horizontal state, whether the pose of the target object in the view image matches with the preset pose for photographing or not is detected.

If the photographing device is determined to be in the horizontal state currently, it means that a horizontal image photographed at this moment may be obtained, and thus a better photographing effect may be reached. Therefore, the photographing device may detect whether the pose of the target object in the view image matches with the preset pose for photographing. If it matches, step 304 is performed; if not, step 306 is performed. Usually, the number of target object is one, i.e., the method for image photographing is used for photographing a single object.

Alternatively, this step may include:
The photographing device identifies the view image, detect whether the pose of the target object in the view image matches with the preset pose for photographing, wherein the pose of the target object includes a head orientation and a body angle.

In step 304, if the pose of the target object matches with the preset pose for photographing, whether the view image is consistent with preset conditions or not is detected.

Preset conditions include: the proportion of the target object in the view image reaching a preset proportion, and/or the area occupied by the target object in the view image being a preset area.

If the preset conditions include that the proportion of target object in the view image reaches a preset proportion, then in the case that the pose of the target object detected by the photographing device matches with the preset pose for photographing, the photographing device may determine the proportion of target object in the view image. For example, for the view image shown in Fig. 3B, the photographing device may determine that the proportion of target object in the view image is 2/5. Upon determining the proportion occupied by target object, the photographing device may detect if the proportion reaches the preset proportion. For example, whether 2/5 reaches the preset proportion of 1/4 is detected.

If the preset conditions include that the area occupied by the target object in the view image is the preset area, upon the detection by the photographing device that the pose of the target object matches the preset pose for photographing, the photographing device may determine the area occupied by the target object in the view image. For example, as shown in Fig. 3B, the photographing device may determine that the area occupied by the target object is area 31. Upon determining the area occupied by the target object in the view image, the photographing device may detect if the area is the preset area. For example, area 31 is the preset area 32 or not is detected. Indeed, "the area occupied by the target object in the view image is the preset area described in this embodiment", refers to that the area occupied in the view image belongs to the preset area. For the purpose of guaranteeing the quality of the image photographed, the preset area is normally the central area of an image.

This embodiment depicts that the preset conditions include the above-mentioned two conditions only by way of illustration. Alternatively, the preset conditions may also include other conditions, without limitation of this embodiment.

In step 305, if the view image is consistent with the preset conditions, an image containing the target object may be automatically photographed.

Alternatively, this step may include:
First, photographing prompt information is sent.

In the case that the photographing device detects that the view image is consistent with the preset conditions, it may issue an photographing prompt information, for example by making a 'tick-tick' sound. Upon hearing the sound prompt information, the user can be aware that the photographing device is going to photograph, then the user may hold the current pose and keep still.

Second, after having been waiting for a predetermined period of time, an image containing the target object is automatically photographed.

Upon the detection by the photographing device that the view image is consistent with the preset conditions, it may start a timer. Once the timing length has reached the predetermined timing length, an image containing the target object is automatically photographed.

And, if the view image is not consistent with the preset conditions, the photographing device will continue to search for a view, and perform step 302 again, which will not be elaborated herein.

In step 306, if the pose of the target object mismatches with the preset pose for photographing, then voice prompt information may be sent, which is used for prompting target object to change his pose.

In this case, in order to photograph an image containing the expected pose the user, the photographing device may issue voice prompt information, which is used for prompting the target object to change his pose. For example, the photographing device may play the voice "Please change your pose".

It is to be noted that, step 302 and 304 are optional. When implementing in practice, step 303 may be executed directly, and when detecting the pose of the target object matches the preset pose for photographing, step 305 may be executed without limitation of this embodiment. In steps 302 and 304, this embodiment only takes the order of execution of steps 302-304 as an example, and alternatively, they may be executed in any order without limitation of this embodiment.

In one application scenarios of the embodiment, user may connect his motion camera with his mobile phone, set the pose he wants to be photographed, and then provide the pose set by the user for the motion camera using the mobile phone. Subsequently, upon detection by the motion camera that the pose in the view image matches the preset pose, and the proportion of the user's image in the view image and/or the area occupied by the user's image in the view image are consistent with the conditions, the motion camera may automatically photograph. Alternatively, before the motion camera performs the operation of photographing, it may further detect whether the motion camera itself is in a horizontal state, and perform the operation of photographing only if in the horizontal state, thereby improving the quality of the image photographed.

To sum up, by obtaining a preset pose for photographing to photograph automatically an image containing the target object, if the pose of the target object in the view image matches with the preset pose for photographing, the method for image photographing provided in the embodiments of the invention may solve the problem that the user needs to make several attempts before getting a satisfactory photographed image; thus reaching the effects that the photographing device may photograph automatically when the pose of a target object matches with the preset pose for photographing, and thus reducing the complexity of user operations. Meanwhile, by automatically photographing an image containing the target object, the method may avoid the problem that a user's expression and pose might be affected due to having the shutter snap when he photographs manually.

By detecting if the photographing device is in the horizontal state, the problem that when a photographing device is tilted, the image photographed by it is also tiled, may be avoided.

The embodiment only performs the photographing when the view image meets the preset conditions, thus avoiding the problem of a poor quality of the image photographed by the photographing device in case of the target object in the view image is too small or the target object is on edge of the view image, and thus reaching the effect of improving the quality of the image photographed.

When the photographing device is photographing, it may issue photographing prompt information. When the user is aware of the photographing prompt information, he may keep still and hold the current pose, guaranteeing that the photographing device may take an image expected by the user.

Meanwhile, when the photographing device detects that the pose of the target object mismatches with the preset pose for photographing, it may issue voice prompt information to prompt the target object to change his pose, ensuring that the photographing device can take an image containing the pose expected by the user faster.

The following description relates to the device embodiments of the invention. For details undisclosed by the device embodiments of the invention, please refer to the method embodiments of the invention.

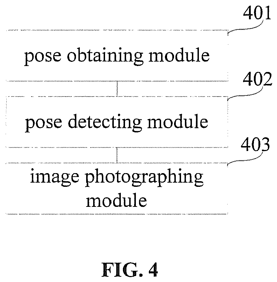

Fig. 4 is a block diagram illustrating a device for image photographing according to an exemplary embodiment. As shown in Fig. 4, the device for image photographing includes, but is not limited to: pose obtaining module 401, pose detecting module 402, and image photographing module 403.

The pose obtaining module 401 is configured to obtain a preset pose for photographing.

The pose detecting module 402 is configured to detect if the pose of the target object in the view image matches with said preset pose for photographing obtained by the pose obtaining module 401.

The image photographing module 403 is configured to photograph automatically an image containing the target object, if the pose of the target object matches with the preset pose for photographing.

To sum up, by obtaining a preset pose for photographing, the device for image photographing provided in the embodiments of the invention may photograph automatically an image containing the target object when the pose of the target object in the view image matches the preset pose for photographing; thus solving the problem that a user needs to make several attempts before taking an satisfactory image; and thus reaching the effects that the photographing device may photograph automatically when the pose of the target object matches the preset pose for photographing. The complexity of user operations is thus reduced.

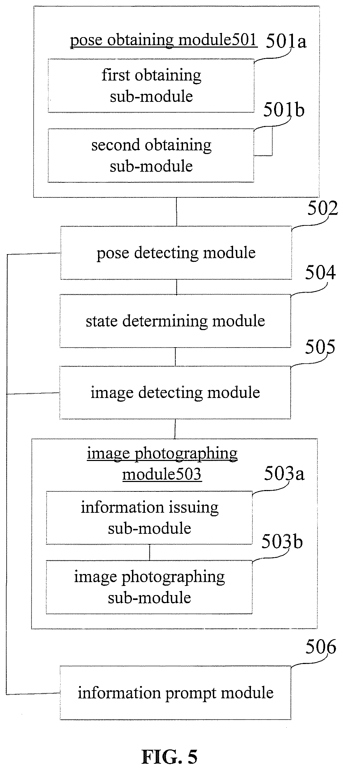

Fig. 5 is a block diagram illustrating a device for image photographing according to an exemplary embodiment. As shown in Fig. 5, the device for image photographing includes, but is not limited to: a pose obtaining module 501, a pose detecting module 502, and an image photographing module 503.

Pose obtaining module 501 is configured to obtain a preset pose for photographing.

Pose detecting module 502 is configured to detect if the pose of the target object in the view image matches with said preset pose for photographing obtained by the pose obtaining module 501.

Image photographing module 503 is configured to photograph automatically an image containing the target object, if the pose of the target object matches with the preset pose for photographing.

Alternatively, the pose obtaining module 501 includes: a first obtaining sub-module 501a, configured to receive a pose setting signal, and take the pose set by the pose setting signal as the preset pose for photographing; or a second obtaining sub-module 501b, configured to obtain a preset pose for photographing from a smart terminal, wherein the preset pose for photographing is a pose being preset in the smart terminal.

Alternatively, the device further includes: a state determining module 504, configured to determine if the photographing device is in a horizontal state according to a gravity sensor; and said image photographing module 503, configured to perform an operation of automatically photographing an image containing the target object when the state determining module 504 determines that the photographing device is in the horizontal state.

Alternatively, the device further includes: an image detecting module 505, configured to detect if the view image is consistent with preset conditions, wherein the preset conditions include: the proportion of the target object in the view image reaching a preset proportion, and/or the area occupied by the target object in the view image being a preset area; and said image photographing module 503, configured to perform an operation of automatically photographing an image containing the target object when the image detecting module 505 detects that the view image is consistent with preset conditions.

Alternatively, said image photographing module 503 includes: an information issuing sub-module 503a, configured to issue photographing prompt information; and an image photographing sub-module 503b, configured to photograph automatically an image containing the target object, upon having waited for a predetermined period of time.

Alternatively, the device further includes: an information prompt module 506, configured to send voice prompt information when the pose of the target object mismatches with the preset pose for photographing, wherein the voice prompt information is used for prompting the target object to change the target object pose.

To sum up, by obtaining a preset pose for photographing, the device for image photographing provided in the embodiments of the invention may photograph automatically an image containing the target object, if the pose of the target object in the view image matches with the preset pose for photographing; solving the problem that a user needs to make several attempts before taking an satisfactory image; thus reaching the effects that the photographing device may photograph automatically when the pose of a target object matches with the preset pose for photographing. The complexity of user operations is thus reduced. Meanwhile, by automatically photographing an image containing the target object, the problem that a user's expression and pose might be affected due to having the shutter snap while photographing manually may be avoided.

By detecting if a photographing device is in the horizontal state before photographing an image, the problem that when a photographing device is tilted, the image photographed by it is also tiled, may be avoided.

The embodiment only performs the operation of photographing when the view image meets preset conditions, thus avoiding the problem of a poor quality of the image photographed by the photographing device in case of the target object in the view image is too small or the target object is on edge of the view image, and thus reaching the effect of improving the quality of the image photographed.

When the photographing device is photographing, it may issue photographing prompt information. When the user is aware of the photographing prompt information, he may keep still and hold the current pose, guaranteeing that the photographing device may take an image expected by the user.

Meanwhile, when the photographing device detects that the pose of the target object mismatches with the preset pose for photographing, it may issue voice prompt information to prompt the target object to change his pose, ensuring that the photographing device can take an image containing the pose expected by the user faster.

With respect to the devices in the above embodiments, the specific manners that the respective modules perform operations have been described in detail in the embodiments regarding the relevant methods, and will not be elaborated herein.

A device for image photographing is provided in an embodiment of the invention, which may implement the method for image photographing provided in the invention, wherein the device includes: a processor; and a memory for storing instructions executable by the processor; wherein the processor is configured to obtain a preset pose for photographing; detect if the pose of target object in the view image matches with the preset pose for photographing; and photograph automatically an image containing the target object, if the pose of the target object matches with the preset pose for photographing.

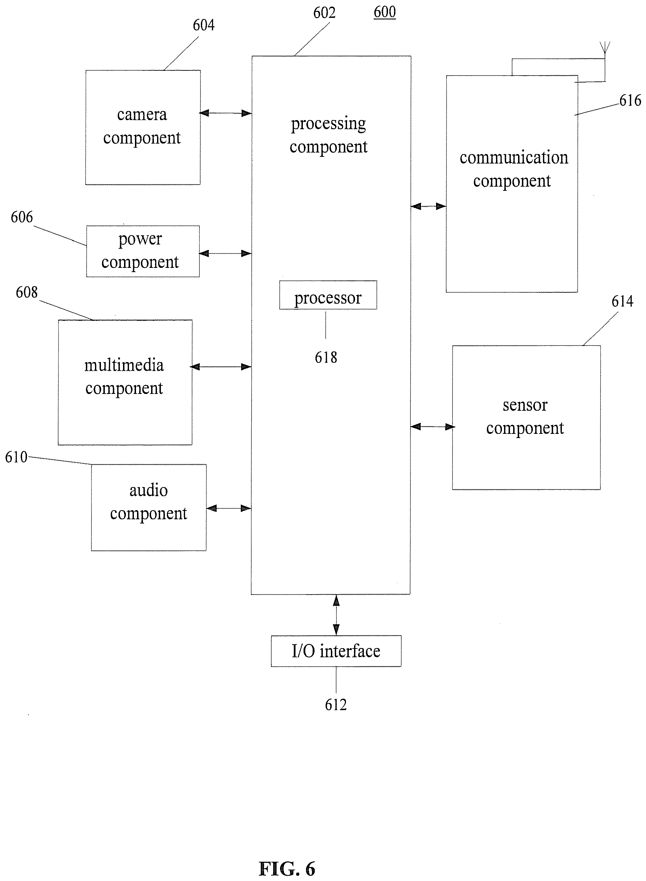

Fig. 6 is a block diagram of a device 600 for image photographing according to an exemplary embodiment. For example, the device 600 may be a mobile phone, a computer, a digital broadcast terminal, a messaging device, a gaming console, a tablet, a medical device, exercise equipment, a personal digital assistant, and the like.

Referring to Fig. 6, the device 600 may include one or more of the following components: a processing component 602, a camera component 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 618 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The camera component 604 is configured to collect images. Such camera component 604 may be a component consisting of optical sensors.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 618 in the device 600, for performing the above-described methods. For example, the non-transitory computer-readable storage medium may be a ROM, a random access memory (RAM), a CD-ROM, a magnetic tape, a floppy disc, an optical data storage device, and the like.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for image photographing, performed by a photographing device, the method comprising:
obtaining (201, 301) a preset pose for photographing;
detecting (202, 303) whether a pose of a target object in a view image matches the preset pose for photographing; and
automatically photographing (203, 305) an image containing the target object, when the pose of the target object matches the preset pose for photographing,
the method being **characterized in that** the preset pose for photographing is obtained by changing a pose of a 3D human figure model displayed on a pose setting interface of the photographing device, wherein:
• the pose of the 3D human figure model is changed by a user sliding up-down or left-right,
• the photographing device receives an up-down or left-right sliding signal for changing the pose of the 3D human figure model imposed by the user, and
• the photographing device rotates the 3D human figure model according to the received up-down or left-right sliding signal to achieve a satisfactory head orientation and body angle, and
• the photographing device determines the pose set by the up-down or left-right sliding signal as the preset pose for photographing, after receiving a pose setting confirmation.

2. The method of claim 1, further comprising:
determining (302) whether the photographing device is in a horizontal state according to a gravity sensor; and
if the photographing device is in the horizontal state, performing the step of detecting (303) whether a pose of a target object in a view image matches the preset pose for photographing.

3. The method of claim 1, further comprising:
detecting (304) whether the view image is consistent with preset conditions, wherein the preset conditions comprise a proportion of the target object in the view image reaching to a preset proportion, and/or an area occupied by the target object in the view image being a preset area;
if the view image is consistent with the preset conditions, automatically photographing (305) the image containing the target object.

4. The method of any one of claims 1 to 3, wherein the step of automatically photographing (305) the image containing the target object comprises:
issuing a photographing prompt information; and
upon having waited for a predetermined period of time, automatically photographing (305) the image containing the target object.

5. The method of any one of claims 1 to 3, further comprising:
if the pose of the target object mismatches the preset pose for photographing, issuing (306) a voice prompt information, wherein the voice prompt information is used for prompting the target object to change the pose of the target object.

6. A device for image photographing, comprising:
a pose obtaining module (401, 501) configured to obtain a preset pose for photographing;
a pose detecting module (402, 502) configured to detect (202, 303) whether a pose of a target object in a view image matches with the preset pose for photographing obtained by the pose obtaining module; and
an image photographing module (403, 503) configured to automatically photograph (203, 305) an image containing the target object, when the pose of the target object matches with the preset pose for photographing,
the device being **characterized in that** the preset pose for photographing is obtained by changing a pose of a 3D human figure model displayed on a pose setting interface of the photographing device, wherein:
• the pose of the 3D human figure model is changed by a user sliding up-down or left-right,
• the device is configured to receive an up-down or left-right sliding signal for changing the pose of the 3D human figure model imposed by the user, and
• the device is configured to rotate the 3D human figure model according to the received up-down or left-right sliding signal to achieve a satisfactory head orientation and body angle, and
• the device is configured to determine the pose set by the up-down or left-right sliding signal as the preset pose for photographing, after receiving a pose setting confirmation.

7. The device of claim 6, further comprising:
a state determining module (504) configured to determine (302) whether the device is in a horizontal state according to a gravity sensor, wherein
the pose detecting module (502) being configured to detect (202, 303) whether a pose of a target object in a view image matches the preset pose for photographing obtained by the pose obtaining module (501), when the state determining module (504) determines that the photographing device is in the horizontal state.

8. The device of claim 6, further comprising:
an image detecting module (505) configured to detect (304) whether the view image is consistent with preset conditions, wherein the preset conditions comprise a proportion of the target object in the view image reaching to a preset proportion, and/or an area occupied by the target object in the view image being a preset area, wherein
the image photographing module (503) is configured to automatically photograph (305) the image containing the target object when the image detecting module detects that the view image is consistent with the preset conditions.

9. The device of any one of claims 6 to 8, wherein the image photographing module (503) comprises:
an information issuing sub-module (503a) configured to issue a photographing prompt information; and
an image photographing sub-module (503b) configured to automatically photograph the image containing the target object upon having waited for a predetermined period of time.

10. The device of any one of claims 6 to 8, further comprising:
an information prompting module (506) configured to issue (306) a voice prompt information, if the pose of the target object mismatches the preset pose for photographing, wherein the voice prompt information is used for prompting the target object to change the pose of the target object.

11. A computer program including instructions for executing the steps of a method for image photographing according to any one of claims 1 to 5 when said program is executed by a computer.

12. A recording medium readable by a computer and having recorded thereon a computer program including instructions for executing the steps of a method for image photographing according to any one of claims 1 to 5.

## Patentansprüche

1. Verfahren zur Bildfotografie, das von einer Fotografievorrichtung durchgeführt wird, wobei das Verfahren umfasst:
Erlangen (201, 301) einer voreingestellten Pose zum Fotografieren,
Detektieren (202, 303), ob eine Pose eines Zielobjekts in einem Ansichtsbild mit der voreingestellten Pose zum Fotografieren übereinstimmt, und
automatisches Fotografieren (203, 305) eines Bilds, welches das Zielobjekt enthält, wenn die Pose des Zielobjekts mit der voreingestellten Pose zum Fotografieren übereinstimmt,
wobei das Verfahren **dadurch gekennzeichnet ist, dass** die voreingestellte Pose zum Fotografieren durch Verändern einer Pose eines 3D-Modells mit menschlicher Figur erlangt wird, das auf einer Poseneinstellungsoberfläche der Fotografievorrichtung angezeigt wird, wobei:
• die Pose des 3D-Modells mit menschlicher Figur dadurch verändert wird, dass ein Benutzer von oben nach unten oder von links nach rechts wischt,
• die Fotografievorrichtung ein Signal des Wischens von oben nach unten oder von links nach rechts zum Verändern der Pose des 3D-Modells mit menschlicher Figur empfängt, das durch den Benutzer angeordnet wurde, und
• die Fotografievorrichtung das 3D-Modell mit menschlicher Figur gemäß dem empfangenen Signal des Wischens von oben nach unten oder von links nach rechts dreht, um eine/n zufriedenstellende/n Kopfausrichtung und Körperwinkel zu erreichen, und
• die Fotografievorrichtung die Pose, die durch das Signal des Wischens von oben nach unten oder von links nach rechts eingestellt wurde, als die voreingestellte Pose zum Fotografieren nach Empfangen einer Poseneinstellungsbestätigung bestimmt.

2. Verfahren nach Anspruch 1, ferner umfassend:
Bestimmen (302), ob sich die Fotografievorrichtung in einem horizontalen Zustand befindet, gemäß einem Schwerkraftsensor, und
wenn sich die Fotografievorrichtung in dem horizontalen Zustand befindet, Durchführen des Schritts des Detektierens (303), ob eine Pose eines Zielobjekts in einem Ansichtsbild mit der voreingestellten Pose zum Fotografieren übereinstimmt.

3. Verfahren nach Anspruch 1, ferner umfassend:
Detektieren (304), ob das Ansichtsbild mit voreingestellten Bedingungen konsistent ist, wobei die voreingestellten Bedingungen umfassen, dass ein Größenverhältnis des Zielobjekts in dem Ansichtsbild ein voreingestelltes Größenverhältnis erreicht und/oder eine Fläche, die durch das Zielobjekt in dem Ansichtsbild eingenommen wird, eine voreingestellte Fläche ist,
wenn das Ansichtsbild mit den voreingestellten Bedingungen konsistent ist, automatisches Fotografieren (305) des Bilds, welches das Zielobjekt enthält.

4. Verfahren nach einem der Ansprüche 1 bis 3, wobei der Schritt des automatischen Fotografierens (305) des Bilds, welches das Zielobjekt enthält, umfasst:
Ausgeben einer Fotografieaufforderungsinformation und,
nach Warten für einen vorbestimmten Zeitraum, automatisches Fotografieren (305) des Bilds, welches das Zielobjekt enthält.

5. Verfahren nach einem der Ansprüche 1 bis 3, ferner umfassend:
wenn die Pose des Zielobjekts nicht mit der voreingestellten Pose zum Fotografieren übereinstimmt, Ausgeben (306) einer Sprachaufforderungsinformation, wobei die Sprachaufforderungsinformation dazu verwendet wird, dass das Zielobjekt zum Verändern der Pose des Zielobjekts aufgefordert wird.

6. Vorrichtung zur Bildfotografie, umfassend:
ein Posenerlangungsmodul (401, 501), das dazu ausgestaltet ist, eine voreingestellte Pose zum Fotografieren zu erlangen,
ein Posendetektionsmodul (402, 502), das dazu ausgestaltet ist, zu detektieren (202, 303), ob eine Pose eines Zielobjekts in einem Ansichtsbild mit der voreingestellten Pose zum Fotografieren übereinstimmt, die durch das Posenerlangungsmodul erlangt wurde, und
ein Bildfotografiemodul (403, 503), das dazu ausgestaltet ist, ein Bild, welches das Zielobjekt enthält, automatisch zu fotografieren (203, 305), wenn die Pose des Zielobjekts mit der voreingestellten Pose zum Fotografieren übereinstimmt,
wobei die Vorrichtung **dadurch gekennzeichnet ist, dass** die voreingestellte Pose zum Fotografieren durch Verändern einer Pose eines 3D-Modells mit menschlicher Figur erlangt wird, das auf einer Poseneinstellungsoberfläche der Fotografievorrichtung angezeigt wird, wobei:
• die Pose des 3D-Modells mit menschlicher Figur dadurch verändert wird, dass ein Benutzer von oben nach unten oder von links nach rechts wischt,
• die Vorrichtung dazu ausgestaltet ist, ein Signal des Wischens von oben nach unten oder von links nach rechts zum Verändern der Pose des 3D-Modells mit menschlicher Figur zu empfangen, das durch den Benutzer angeordnet wurde, und
• die Vorrichtung dazu ausgestaltet ist, das 3D-Modell mit menschlicher Figur gemäß dem empfangenen Signal des Wischens von oben nach unten oder von links nach rechts zu drehen, um eine/n zufriedenstellende/n Kopfausrichtung und Körperwinkel zu erreichen, und
• die Vorrichtung dazu ausgestaltet ist, die Pose, die durch das Signal des Wischens von oben nach unten oder von links nach rechts eingestellt wurde, als die voreingestellte Pose zum Fotografieren nach Empfangen einer Poseneinstellungsbestätigung zu bestimmen.

7. Vorrichtung nach Anspruch 6, ferner umfassend:
ein Zustandsbestimmungsmodul (504), das dazu ausgestaltet ist, zu bestimmen (302), ob sich die Vorrichtung in einem horizontalen Zustand befindet, gemäß einem Schwerkraftsensor, wobei
das Posendetektionsmodul (502) dazu ausgestaltet ist, zu detektieren (202, 303), ob eine Pose eines Zielobjekts in einem Ansichtsbild mit der voreingestellten Pose zum Fotografieren übereinstimmt, die durch das Posenerlangungsmodul (501) erlangt wurde, wenn das Zustandsbestimmungsmodul (504) bestimmt, dass sich die Fotografievorrichtung in dem horizontalen Zustand befindet.

8. Vorrichtung nach Anspruch 6, ferner umfassend:
ein Bilddetektionsmodul (505), das dazu ausgestaltet ist, zu detektieren (304), ob das Ansichtsbild mit voreingestellten Bedingungen konsistent ist, wobei die voreingestellten Bedingungen umfassen, dass ein Größenverhältnis des Zielobjekts in dem Ansichtsbild ein voreingestelltes Größenverhältnis erreicht und/oder eine Fläche, die durch das Zielobjekt in dem Ansichtsbild eingenommen wird, eine voreingestellte Fläche ist, wobei
das Bildfotografiemodul (503) dazu ausgestaltet ist, das Bild, welches das Zielobjekt enthält, automatisch zu fotografieren (305), wenn das Bilddetektionsmodul detektiert, dass das Ansichtsbild mit den voreingestellten Bedingungen konsistent ist.

9. Vorrichtung nach einem der Ansprüche 6 bis 8, wobei das Bildfotografiemodul (503) umfasst:
ein Informationsausgabe-Teilmodul (503a), das dazu ausgestaltet ist, eine Fotografieaufforderungsinformation auszugeben, und
ein Bildfotografie-Teilmodul (503b), das dazu ausgestaltet ist, das Bild, welches das Zielobjekt enthält, nach Warten für einen vorbestimmten Zeitraum automatisch zu fotografieren.

10. Vorrichtung nach einem der Ansprüche 6 bis 8, ferner umfassend:
ein Informationsaufforderungsmodul (506), das dazu ausgestaltet ist, eine Sprachaufforderungsinformation auszugeben (306), wenn die Pose des Zielobjekts nicht mit der voreingestellten Pose zum Fotografieren übereinstimmt, wobei die Sprachaufforderungsinformation dazu verwendet wird, dass das Zielobjekt zum Verändern der Pose des Zielobjekts aufgefordert wird.

11. Computerprogramm, das Anweisungen zum Ausführen der Schritte eines Verfahrens zur Bildfotografie nach einem der Ansprüche 1 bis 5 beinhaltet, wenn das Programm von einem Computer ausgeführt wird.

12. Aufzeichnungsmedium, das von einem Computer gelesen werden kann und auf dem ein Computerprogramm aufgezeichnet ist, das Anweisungen zum Ausführen der Schritte eines Verfahrens zur Bildfotografie nach einem der Ansprüche 1 bis 5 beinhaltet.

## Revendications

1. Procédé de photographie d'image, mis en oeuvre par un dispositif photographique, le procédé comprenant les étapes ci-dessous consistant à :
obtenir (201, 301) une pose prédéfinie pour une prise de vue ;
détecter (202, 303) si une pose d'un objet cible dans une image de vue correspond à la pose prédéfinie pour la prise de vue ; et
photographier automatiquement (203, 305) une image contenant l'objet cible, lorsque la pose de l'objet cible correspond à la pose prédéfinie pour la prise de vue ;
le procédé étant **caractérisé en ce que** la pose prédéfinie pour la prise de vue est obtenue en modifiant une pose d'un modèle de silhouette humaine en 3D affiché sur une interface de réglage de pose du dispositif photographique, dans lequel :
• la pose du modèle de silhouette humaine en 3D est modifiée par un utilisateur effectuant un glissement vers le haut ou vers le bas, ou vers la gauche ou vers la droite ;
• le dispositif photographique reçoit un signal de glissement vers le bas ou vers le haut, ou vers la gauche ou vers la droite, pour modifier la pose du modèle de silhouette humaine en 3D imposée par l'utilisateur ; et
• le dispositif photographique fait tourner le modèle de silhouette humaine en 3D selon le signal de glissement vers le bas ou vers le haut, ou vers la gauche ou vers la droite, reçu, en vue d'obtenir une orientation de tête et un angle corporel satisfaisants ; et
• le dispositif photographique détermine la pose définie par le signal de glissement vers le bas ou vers le haut, ou vers la gauche ou vers la droite, comme étant la pose prédéfinie pour la prise de vue, suite à la réception d'une confirmation de réglage de pose.

2. Procédé selon la revendication 1, comprenant en outre les étapes ci-dessous consistant à :
déterminer (302) si le dispositif photographique est dans un état horizontal selon un capteur de gravité ; et
si le dispositif photographique est dans l'état horizontal, mettre en oeuvre l'étape consistant à détecter (303) si une pose d'un objet cible dans une image de vue correspond à la pose prédéfinie pour la prise de vue.

3. Procédé selon la revendication 1, comprenant en outre les étapes ci-dessous consistant à :
détecter (304) si l'image de vue est conforme à des conditions prédéfinies, dans lequel les conditions prédéfinies comprennent qu'une proportion de l'objet cible dans l'image de vue atteint une proportion prédéfinie, et/ou qu'une zone occupée par l'objet cible dans l'image de vue correspond à une zone prédéfinie ;
si l'image de vue est conforme aux conditions prédéfinies, photographier automatiquement (305) l'image contenant l'objet cible.

4. Procédé selon l'une quelconque des revendications 1 à 3, dans lequel l'étape consistant à photographier automatiquement (305) l'image contenant l'objet cible comprend les étapes ci-dessous consistant à :
émettre des informations d'invite de photographie ; et
après une période de temps d'attente prédéterminée, photographier automatiquement (305) l'image contenant l'objet cible.

5. Procédé selon l'une quelconque des revendications 1 à 3, comprenant en outre l'étape ci-dessous consistant à :
si la pose de l'objet cible ne correspond pas à la pose prédéfinie pour la prise de vue, émettre (306) des informations d'invite vocale, dans lequel les informations d'invite vocale sont utilisées en vue d'inviter l'objet cible à modifier la pose de l'objet cible.

6. Dispositif de photographie d'image, comprenant :
un module d'obtention de pose (401, 501) configuré de manière à obtenir une pose prédéfinie pour une prise de vue ;
un module de détection de pose (402, 502) configuré de manière à détecter (202, 303) si une pose d'un objet cible dans une image de vue correspond à la pose prédéfinie pour la prise de vue obtenue par le module d'obtention de pose ; et
un module de photographie d'image (403, 503) configuré de manière à photographier automatiquement (203, 305) une image contenant l'objet cible, lorsque la pose de l'objet cible correspond à la pose prédéfinie pour la prise de vue ;
le dispositif étant **caractérisé en ce que** la pose prédéfinie pour la prise de vue est obtenue en modifiant une pose d'un modèle de silhouette humaine en 3D affiché sur une interface de réglage de pose du dispositif photographique, dans lequel :
• la pose du modèle de silhouette humaine en 3D est modifiée par un utilisateur effectuant un glissement vers le haut ou vers le bas, ou vers la gauche ou vers la droite ;
• le dispositif est configuré de manière à recevoir un signal de glissement vers le bas ou vers le haut, ou vers la gauche ou vers la droite, pour modifier la pose du modèle de silhouette humaine en 3D imposée par l'utilisateur ;
• le dispositif est configuré de manière à faire tourner le modèle de silhouette humaine en 3D selon le signal de glissement vers le bas ou vers le haut, ou vers la gauche ou vers la droite, reçu, en vue d'obtenir une orientation de tête et un angle corporel satisfaisants ; et
• le dispositif est configuré de manière à déterminer la pose définie par le signal de glissement vers le bas ou vers le haut, ou vers la gauche ou vers la droite, comme étant la pose prédéfinie pour la prise de vue, suite à la réception d'une confirmation de réglage de pose.

7. Dispositif selon la revendication 6, comprenant en outre :
un module de détermination d'état (504) configuré de manière à déterminer (302) si le dispositif est dans un état horizontal selon un capteur de gravité, dans lequel :
le module de détection de pose (502) est configuré de manière à détecter (202, 303) si une pose d'un objet cible dans une image de vue correspond à la pose prédéfinie pour la prise de vue obtenue par le module d'obtention de pose (501), lorsque le module de détermination d'état (504) détermine que le dispositif photographique est dans l'état horizontal.

8. Dispositif selon la revendication 6, comprenant en outre :
un module de détection d'image (505) configuré de manière à détecter (304) si l'image de vue est conforme à des conditions prédéfinies, dans lequel les conditions prédéfinies comprennent qu'une proportion de l'objet cible dans l'image de vue atteint une proportion prédéfinie, et/ou qu'une zone occupée par l'objet cible dans l'image de vue correspond à une zone prédéfinie ; dans lequel
le module de photographie d'image (503) est configuré de manière à photographier automatiquement (305) l'image contenant l'objet cible lorsque le module de détection d'image détecte que l'image de vue est conforme aux conditions prédéfinies.

9. Dispositif selon l'une quelconque des revendications 6 à 8, dans lequel le module de photographie d'image (503) comprend :
un sous-module d'émission d'informations (503a) configuré de manière à émettre des informations d'invite de photographie ; et
un sous-module de photographie d'image (503b) configuré de manière à photographier automatiquement l'image contenant l'objet cible à l'issue d'une période de temps d'attente prédéterminée.

10. Dispositif selon l'une quelconque des revendications 6 à 8, comprenant en outre :
un module d'invite d'informations (506) configuré de manière à émettre (306) des informations d'invite vocale, si la pose de l'objet cible ne correspond pas à la pose prédéfinie pour la prise de vue, dans lequel les informations d'invite vocale sont utilisées en vue d'inviter l'objet cible à modifier la pose de l'objet cible.

11. Programme informatique incluant des instructions pour exécuter les étapes d'un procédé de photographie d'image selon l'une quelconque des revendications 1 à 5 lorsque ledit programme est exécuté par un ordinateur.

12. Support d'enregistrement lisible par un ordinateur et sur lequel est enregistré un programme informatique incluant des instructions pour exécuter les étapes d'un procédé de photographie d'image selon l'une quelconque des revendications 1 à 5.
